# EUROPEAN PATENT SPECIFICATION

(11) **EP 2 714 824 B1**
(45) Date of publication and mention of the grant of the patent: **08.07.2015**
(21) Application number: 12725966.1
(22) Date of filing: 22.05.2012
(51) Int. Cl.: C09D 7/00, C09D 15/00, B27K 5/02

(54) **METHODS FOR COLORING A WOOD SUBSTRATE, RELATED COMPOSITIONS AND SUBSTRATES**
VERFAHREN ZUM FÄRBEN EINES HOLZSUBSTRATS, ZUGEHÖRIGE ZUSAMMENSETZUNGEN UND SUBSTRATE
PROCÉDÉS DE COLORATION D'UN SUBSTRAT EN BOIS, ET COMPOSITIONS ET SUBSTRATS ASSOCIÉS

(30) Priority: 23.05.2011 US 201113113292
(43) Date of publication of application: 09.04.2014
(73) Proprietor: PPG Industries Ohio, Inc., Cleveland, OH 44111 (US)
(72) Inventor: POSEY, David, Greensboro, NC 27409 (US)
(74) Representative: f & e patent
(86) International application number: PCT/US2012/038953
(87) International publication number: WO 2012/162295

(56) References cited:
- WO-A2-2006/071695
- US-A1- 2004 151 931
- US-B1- 7 465 759

## Description

### FIELD OF THE INVENTION

The present invention relates to, among other things, methods for coloring a wood substrate, compositions, such as wood stains, suitable for use in such methods, and wood substrates at least partially coated with a multi-layer coating system.

### BACKGROUND OF THE INVENTION

There are a number of considerations relevant in the art of protective and decorative coating systems for wood substrates used to manufacture cabinets, flooring, furniture, and other articles. As will be appreciated, such coating systems are often made up of more than one coating layer. Wood substrates are often coated with multi-layer composite coating systems that include one or more colorant layers, sealer layers, and/or topcoat layers. The sealer layer is often a protective layer that is sanded to provide a smooth finish and the topcoat layer is often a protective layer that provides surface properties, such as mar and scratch resistance.

With respect to the colorant layer(s) in particular, it is sometimes desirable, often for manufacturing efficiency reasons, to provide coloring compositions that can be applied conveniently using spray application equipment to provide a coloring layer having a desirable appearance without the need to remove excess material from the substrate by wiping with a cloth or similar device. Examples of undesirable appearance attributes that are to be avoided are blotching, puddling, and blushing. Other desirable attributes for such coloring compositions include environmental friendliness and adhesion to subsequently applied coatings.

US 2004/151931 A1 discloses a method for staining a wooden substrate comprising applying a stain by using a spray gun, said stain comprising an alkyd-based polymer, colorants and a plurality of organic solvents having a relative evaporation rate (RER) of less than 3.

### SUMMARY OF THE INVENTION

In certain respects, the present invention is directed to methods for coloring a wood substrate. These methods comprise spray applying a coloring composition to the substrate, the coloring composition comprising: (a) film-forming resin, (b) a colorant, and (c) a plurality of organic solvents, wherein (i) the organic solvents have a weight average relative evaporation rate, relative to n-butyl acetate, of from 3.0 to 5.0; and (ii) the composition has no more than 1 pound per gallon of VOLATILE ORGANIC COMPOUND (defined herein).

### DETAILED DESCRIPTION OF EMBODIMENTS OF THE INVENTION

For purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In certain embodiments, the present invention is directed to coloring compositions, such as "stains", which are suitable for application over wood substrates. As used herein, the term "stain" refers to a translucent composition that can color a wood substrate while allowing some of the substrate's natural color and grain to show through. In certain embodiments, the stains or coloring compositions of the present invention have a relatively low solids content (no more than 10 percent by weight, such as no more than 5 percent by weight, solids and at least 90 percent by weight, such as at least 95 percent by weight, solvent, with such weight percents being based on the total composition weight).

The coloring compositions of the present invention comprise a film-forming resin. As used herein, the term "film-forming resin" refers to resins that can form a self-supporting continuous film on at least a horizontal surface of a substrate upon removal of any diluents or carriers present in the composition or curing. Exemplary film-forming resins include thermoplastic and thermosetting film-forming resins.

In certain embodiments, the film-forming resin included within the compositions of the present invention comprises a thermoplastic resin. As used herein, the term "thermoplastic" refers to resins that comprise polymeric components that are not joined by covalent bonds and thereby can undergo liquid flow upon heating and are soluble in solvents. *See* Saunders, K.J., Organic Polymer Chemistry, pp. 41-42, Chapman and Hall, London (1973).

The film-forming resin utilized in the compositions of the present invention is not limited and may include, for example, any film-forming resin typically used in the art, such as polyurethanes, acrylics, vinyls, melamines, polyvinylchlorides, polyolefins, polyureas, polycarbonates, polyethers, polyesters, epoxies, silicones, polyamides, and the like. Appropriate mixtures of film-forming resins may also be used in the preparation of the coating compositions.

In certain embodiments, the foregoing film-forming resin, such as a thermoplastic acrylic resin, is present in the coloring compositions of the present invention in an amount of at least 0.1 percent by weight or, in some embodiments, at least 0.5 percent by weight, or, in yet other embodiments, at least 1.0 percent by weight, based on the total weight of the composition. In certain of these embodiments, the foregoing film-forming resin, such as a thermoplastic acrylic resin, is present in the coloring compositions of the present invention in an amount of no more than 10 percent by weight or, in some embodiments, no more than 5 percent by weight, or, in yet other embodiments, no more than 2 percent by weight, based on the total weight of the composition.

The coloring compositions of the present invention also comprise a colorant. As used herein, the term "colorant" means any substance that imparts color and/or other visual effect to the composition. The colorant can be added to the coating in any suitable form, such as discrete particles, dispersions, solutions and/or flakes. A single colorant or a mixture of two or more colorants can be used in the coatings of the present invention.

Example colorants include pigments, dyes and tints, such as those used in the paint industry and/or listed in the Dry Color Manufacturers Association (DCMA). A colorant may include, for example, a finely divided solid powder that is insoluble but wettable under the conditions of use. A colorant can be organic or inorganic and can be agglomerated or non-agglomerated.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black and mixtures thereof. The terms "pigment" and "colored filler" can be used interchangeably.

Example dyes include, but are not limited to, those that are solvent and/or aqueous based such as pthalo green or blue, iron oxide, bismuth vanadate, anthraquinone, perylene, aluminum and quinacridone.

The colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having a particle size of less than 150 nm, such as less than 70 nm, or less than 30 nm. Nanoparticles can be produced by milling stock organic or inorganic pigments with grinding media having a particle size of less than 0.5 mm. Example nanoparticle dispersions and methods for making them are identified in U.S. Patent No. 6,875,800 B2, which is incorporated herein by reference. Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discreet "composite microparticles" that comprise a nanoparticle and a resin coating on the nanoparticle.

In certain embodiments, the colorant comprises a carrier material that is soluble in the organic solvents present in the composition. In certain embodiments, such a carrier comprises a vinyl chloride-vinyl acetate copolymer, such as is the case with the commercially available Hostaprint® pigment preparations commercially available from Clariant International Ltd.

In certain embodiments, colorant is present in the coloring composition of the present invention in an amount of at least 0.1, such as at least 0.2, or, in some cases, at least 0.3 percent by weight, based on the total weight of the composition. In certain of these embodiments, colorant is present in the coloring composition of the present invention in an amount of no more than 5, such as no more than 1, or, in some cases, no more than 0.5 percent by weight, based on the total weight of the composition.

As previously indicated, the coloring compositions of the present invention comprise a plurality of organic solvents. In certain embodiments, the plurality of organic solvents is present in the coloring compositions of the present invention in an amount of at least 70, such as at least 80, or at least 90 percent by weight, based on the total weight of the composition. In certain embodiments, the plurality of organic solvents is present in the coloring compositions of the present invention in an amount of up to 99, such as up to 98, or up to 97.5 percent by weight, based on the total weight of the composition.

Despite the relatively high level of organic solvent present in the coloring compositions of certain embodiments of the present invention, the coloring compositions of the present invention contain no more than 1 pound per gallon, in some cases no more than 0.8 pounds per gallon, or, in yet other cases, no more than 0.6 pounds per gallon, of VOLATILE ORGANIC COMPOUND. As used herein, the term "VOLATILE ORGANIC COMPOUND" refers to volatile organic compounds (VOC) according to the definition set forth in 40 CFR Part 51.100(s) (as amended through January 21, 2009), which is incorporated herein by reference.

In addition, in the compositions of the present invention, the organic solvents (and their relative amounts) are selected so as to have a weight average relative evaporation rate of at least 3.0, such as at least 3.5, or, in some cases at least 4.0 and no more than 5.0, or, in some cases, no more than 4.8, or, in some cases, no more than 4.6. It is believed that selection of organic solvents so as to result in a weight average relative evaporation rate within the foregoing range is critical to achieving a wood coloring composition, such as a stain, that has a desirable appearance (no blotching, puddling, or blushing) when spray applied and even without then need to remove excess material from the substrate, such as by wiping with a cloth or similar device. More specifically, it is believed that when the weight average relative evaporation rate is less than 3.0 an undesirable puddling will occur upon spray application of the present composition whereas when the weight average relative evaporation rate is greater than 5.0 an undesirable blotching will occur with such spray application.

As used herein, the term "relative evaporation rate" ("RER") refers to evaporation rate as measured by ASTM D 3539-87 (reapproved 2004), which expresses evaporation rate of a material relative to n-butyl acetate (i.e., on a scale where the evaporation rate of n-butyl acetate = 1). As used herein, "weight average relative evaporation rate" refers to the weighted average of the relative evaporation rates of all organic solvents in the composition, based on the total weight of such solvents.

As will be apparent, therefore, the organic solvents present in the compositions of the present invention are selected to have a relatively high weight average evaporation rate, at least relative to n-butyl acetate. Therefore, the compositions of the present invention comprise at least one "high volatile solvent", which, as used herein, refers to organic solvents that have a RER of more than 5.5. Examples of such solvents are acetone (RER=5.7), methyl acetate (RER=6.0), and hexane (RER=8.3).

In the present invention, however, acetone and/or methyl acetate can be particularly suitable because neither is a VOLATILE ORGANIC COMPOUND. As a result, in certain embodiments, the organic solvents present in the compositions of the present invention comprise acetone and/or methyl acetate. More specifically, in certain embodiments, acetone is present in the compositions of the present invention in an amount of at least 90 percent by weight, such as at least 95 percent by weight, or, in some cases, at least 99 percent by weight, such weight percents being based on the total weight of high volatile solvent present in the composition. Moreover, in certain of these embodiments, acetone is present in an amount of at least 5 pounds per gallon of the composition,

In addition, in certain embodiments, acetone is present in an amount of at least 50 percent by weight, such as at least 60 percent by weight, or at least 70 percent by weight, based on the total weight of organic solvents present in the composition. Also, in certain of these embodiments, acetone is present in an amount of no more than 95 percent by weight, such as no more than 90 percent by weight, or no more than 80 percent by weight, based on the total weight of organic solvents present in the composition.

In addition, in certain embodiments, the coloring compositions of the present invention comprise a "non-high volatile solvent" which, as used herein, refers to organic solvents that have an RER of greater than 0.8 and no more than 5.5. In certain of these embodiments, the compositions of the present invention comprise a non-high volatile solvent that has an RER of no more than 3.5, such as no more than 3.0, no more than 2.0 or, in some cases, no more than 1.0.

Examples of non-high volatile solvents that are suitable for use in the present invention, are ethyl acetate (RER=4.1), methyl ethyl ketone (RER=3.9), methanol (RER=3.5), dimethyl carbonate (RER=3.2), t-butyl acetate (RER=2.8), methyl propyl ketone (RER=2.3), n-propyl acetate (RER=2.3), toluene (RER=1.9), ethanol (RER=1.7), isopropanol (RER=1.7), VM&P Naphtha ASTM D 3735 Type I (RER=1.6), methyl isobutyl ketone (MIBK) (RER=1.6), methyl formate (RER=1.6), isobutyl acetate (RER=1.4), 2-nitropropane (RER=1.1), n-butyl acetate (RER=1.0), n-propyl acetate (RER=1.0), sec-butyl alcohol (RER=0.9), and parachlorobenzotrifluoride (RER=0.9), including mixtures of two or more thereof.

In the present invention, however, dimethyl carbonate, methyl formate, t-butyl acetate and/or parachlorobenzotrifluoride can be particularly suitable because none is a VOLATILE ORGANIC COMPOUND. As a result, in certain embodiments, the compositions of the present invention comprise at least one of the foregoing non-high volatile solvents. More specifically, in certain embodiments, t-butyl acetate and/or parachlorobenzotrifluoride is present in the compositions of the present invention in an amount of at least 90 percent by weight, such as at least 95 percent by weight, or, in some cases, at least 99 percent by weight, such weight percents being based on the total weight of non-high volatile solvent present in the composition.

In addition, in certain embodiments, parachlorobenzotrifluoride is present in an amount of at least 1 percent by weight, such as at least 5 percent by weight, or at least 10 percent by weight, based on the total weight of organic solvent present in the composition. Also, in certain of these embodiments, parachlorobenzotrifluoride is present in an amount of no more than 30 percent by weight, such as no more than 25 percent by weight, or no more than 20 percent by weight, based on the total weight of organic solvent present in the composition.

In addition, in certain embodiments, the coloring compositions of the present invention comprise a "slow volatile solvent" which, as used herein, refers to solvents that have an RER of no more than 0.8. Examples of such solvents are cyclohexanone (RER=0.3), propylene glycol tertiary butyl ether (RER=0.3), methyl isobutyl carbinol (RER=0.3), amyl alcohol (RER=0.3), Aromatic 100 (RER=0.3), propylene glycol propyl ether (RER=0.2), diisobutyl ketone (RER=0.2), dimethylformamide (RER=0.2), n-pentyl propionate (RER=0.18), ethyl 3-ethoxypropionate (RER=0.12), diacetone alcohol (RER=0.12), propylene glycol butyl ether (RER=0.08), Aromatic 150 (RER=0.06), ethylene glycol butyl ether (RER=0.06), cyclohexanol (RER=0.05), n-methyl pyrrolidone (RER=0.04), ethylene glycol butyl ether acetate (RER=0.03), 2-ethylhexyl acetate (RER=0.03), dipropylene glycol methyl ether (RER=0.02), isophorone (RER=0.02), ethylene glycol diacetate (RER=0.02), diethylene glycol methyl ether (RER=0.02), diethylene glycol ethyl ether (RER=0.02), propylene glycol methyl ether (RER=0.7), xylene (RER=0.7), isobutanol (RER=0.6), methyl isoamyl ketone (RER=0.5), methyl amyl acetate (RER=0.5), n-butanol (RER=0.5), PM acetate (RER=0.4), amyl acetate (RER=0.4), methyl n-amyl ketone (RER=0.4), isobutyl isobutyrate (RER=0.4), n-butyl propionate (RER-0.4), and ethylene glycol monopropyl ether (RER=0.2).

In certain embodiments, the slow volatile solvent present in an amount of at least 0.1 percent by weight, such as at least 1 percent by weight, or at least 2 percent by weight, based on the total weight of organic solvent present in the composition. Also, in certain of these embodiments, the slow volatile solvent is present in an amount of no more than 10 percent by weight, such as no more than 5 percent by weight, based on the total weight of organic solvent present in the composition.

In certain embodiments, particularly in certain applications where a radiation curable sealer and/or topcoat is to be applied over the coloring compositions described herein, the coloring composition also comprises polymerizable ethylenically unsaturated compound, such as a (meth)acrylate. As used herein, the term "(meth)acrylate" is meant to include both acrylates and methacrylates. Examples of such materials, which are suitable for use in the present invention include, without limitation, epoxy (meth)acrylates, urethane and polyurethane (meth)acrylates; multi-functional (meth)acrylate monomers; amine-(meth)acrylate adducts; polyester (meth)acrylates; polyalkoxylated and polyether (meth)acrylates; (meth)acrylated acrylic oligomers; and styrene-maleic anhydride or styrene-(meth)acrylic acid oligomers, as well as mixtures thereof.

Suitable epoxy (meth)acrylates include those products formed by the reaction of (meth)acrylic acid with an epoxy (glycidyl) functional component, such as aliphatic and aromatic containing epoxy resins, epoxidized oils, acrylic polymers and acrylic grafted polymers in which the acrylic component contains pendent epoxy groups. Some of the (meth)acrylic acid may be replaced by other acids, both ethylenically unsaturated and saturated, so as to impart specific properties, such as aliphatic acids, fatty acids and aromatic acids.

These products may alternatively be prepared by the reaction of a carboxylic acid functional component (e.g. polyesters and acrylic polymers) with a second component containing both epoxy groups and ethylenic unsaturation, such as glycidyl (meth)acrylate.

Suitable urethane (meth)acrylates include those products formed by the reaction of an isocyanate containing component with a hydroxyl containing component, in which at least one of these components contains ethylenic unsaturation. Examples of isocyanate functional components are hexamethylene diisocyanate, isophorone diisocyanate, isocyanate functional acrylic polymers and polyurethanes, reaction products of hydroxyl functional components (such as poly-ethylene glycol, poly-propylene glycol and di-, tri- and higher hydroxy functionality aliphatic alcohols, such as glycerol and trimethylolpropane and their ethoxylated, propoxylated and polycaprolactone analogs, with polyisocyanates, such as hexamethylene diisocyanate, isophorone diisocyanate and toluene diisocyanate (TDI)). Examples of hydroxy containing ethylenically unsaturated components are hydroxyethyl (meth)acrylate and its ethoxylated, propoxylated and polycaprolactone analogs.

Suitable multi-functional (meth)acrylate monomers include (meth)acrylic acid esters of di-, tri- and higher hydroxy functionality alcohols, such as polyethylene glycol, polypropylene glycol, aliphatic diols, neopentyl glycol, ethoxylated bisphenol A, trimethylolpropane, pentaerythritol, glycerol, ditrimethylolpropane, hydroxyl functional polyesters, dipentaerythritol and the ethoxylated, propoxylated and polycaprolactone analogs of all the above.

Suitable amine-(meth)acrylate adducts include those products prepared by the partial "Michael Type Addition" of primary and secondary amines to ethylenic unsaturation of acrylate containing compounds. Examples of amine-(meth)acrylate adducts are diethylamine modified trimethylolpropane triacrylate and ethanolamine modified ethoxylated trimethylolpropane triacrylate.

Multifunctional acrylate monomers having 5 to 8 (meth)acrylate groups are considered as well known to those skilled in the art, an example of which is dipentaerythritol pentaacrylate.

Suitable polyester (meth)acrylates include the reaction products of polyester polyols with (meth)acrylic acid. Polyalkoxylated polyolacrylates or polyether acrylates may be obtained by reacting (meth)acrylic acid with respectively polyalkoxylated (ethoxylated and/or propoxylated) polyols or polyether polyols (for example polyether based on ethoxy and/or propoxy repeating units).

Suitable (meth)acrylated acrylic oligomers include the reaction products of acrylic oligomeric copolymers bearing epoxy groups (derived for example from glycidyl (meth)acrylate) with (meth)acrylic acid. (Meth)acrylated oligomers of styrene-maleic anhydride or styrene-(meth)acrylic acid oligomers may be obtained by at least partial esterification of anhydride or acid groups by an hydroxy alkyl acrylate (C₂-C₈ alkyl).

In certain embodiments, the compositions of the present invention comprise an amine modified (meth)acrylate. Amine modified (meth)acrylates suitable for use in the present invention include, without limitation, amine modified polyether acrylates, amine modified polyester acrylates, amine modified epoxy acrylates, and amine modified urethane acrylates, including mixtures thereof. Representative specific examples of commercially available amine modified (meth)acrylates suitable for use in the compositions of the present invention include, without limitation, the LAROMER line of amine-modified acrylates available from BASF Corporation, Charlotte, North Carolina, such as LAROMER PO77F, PO94F, and LR8996; CN501, CN502, CN550, and CN551 available from Sartomer Corp., Exton, Pennsylvania; and ACTILANE 525, 584, and 587 available from Akcros Chemicals, New Brunswick, New Jersey.

Other suitable ethylenically unsaturated compounds include the long chain alkyl group containing ethylenically unsaturated compounds described in U.S. Patent No. 7,691,484 at col. 8, line 51 to col. 9, line 63, the cited portion of which being incorporated herein by reference.

In certain embodiments, the ethylenically unsaturated compound is present in the coloring compositions of the present invention in an amount of at least 0.01 percent by weight or, in some embodiments, at least 0.1 percent by weight, with such weight percents being based on the total weight of the composition. In certain of these embodiments, the ethylenically unsaturated compound is present in the coloring compositions of the present invention in an amount of no more than 5 percent by weight or, in some embodiments, no more than 2 percent by weight, such as no more than 1 percent by weight, with such weight percents being based on the total weight of the composition.

In addition to the previously described components, the compositions of the present invention may include other components, such as, for example, cationic and/or free radical photoinitiators. Suitable free radical photoinitiators include, but are not limited to, benzophenones, acetophenone derivatives, such as alpha-hydroxyalkylphenylketones, benzoins such as benzoin alkyl ethers and benzyl ketals, monoacylphosphine oxides, bisacylphosphine oxides, and 2,4,6-trimethylbenzoyl-diphenyl-phosphine oxide.

In certain embodiments, the photoinitiator is present in the coloring compositions of the present invention in an amount of at least 0.01 percent by weight or, in some embodiments, at least 0.1 percent by weight, with such weight percents being based on the total weight of the composition. In certain of these embodiments, the photoinitiator is present in the coating compositions of the present invention in an amount of no more than 5 percent by weight or, in some embodiments, no more than 2 percent by weight, such as no more than 1 percent by weight, with such weight percents being based on the total weight of the composition.

As will be appreciated, the coloring compositions of the present invention may also include other components, such as, for example, additives commonly used in formulating coating compositions, for example, plasticizers, surfactants, UV absorbers, wetting agents, and flow control agents, among others.

The coloring compositions of the present invention are applied to a wood substrate, which includes wood veneers and wood products. Various woods that can be colored with the present compositions include, for example, oak, cherry, pine, and maple. These types of woods are often used in the preparation of, for example, kitchen cabinets, bath cabinets, tables, desks, dressers, and other furniture, as well as flooring, such as hardwood and parquet flooring.

The compositions of the present invention can be applied to the substrate by any means known in the art. For example, they can be applied by brushing, dipping, flow coating, roll coating and spraying. As indicated previously, however, it can be particularly desirable to apply the compositions of the present application by spray application. Any of the spray guns known to those of skill in the art may be utilized in the methods of the present invention, including, for example, conventional air, airless, air-assisted airless, and high velocity low pressure (HVLP) spray guns and electrostatic spray equipment. Notably, it has been discovered that the compositions of the present invention can be effectively spray applied using spray application equipment to provide a coloring layer having a desirable appearance without the need to remove excess material from the substrate by wiping with a cloth or similar device.

As will be appreciated, particularly in the treatment of wood substrates, additional layers such as a sealer and/or a topcoat may be applied over the top of a colorant layer formed from the coloring compositions described herein. Therefore, certain embodiments of the present invention are directed to substrates at least partially coated with a multi-layer composite coating system. As used herein, the term "multi-layer composite coating system" refers to coating system that contains at least two coating layers applied successively over a substrate, such as a wood substrate.

The coating systems of the present invention comprise (i) a colorant layer deposited from any of the foregoing compositions of the present invention and (ii) at least one of a sealer and topcoat deposited over at least a portion of the colorant layer. In certain embodiments, at least one of the sealer and topcoat is deposited from a radiation curable composition. As used herein, the term "radiation curable composition" refers to a composition that comprises a radiation curable material. As used herein, the term "radiation curable material" refers to materials having reactive components that are polymerizable by exposure to actinic radiation. In certain embodiments, the coating systems of the present invention comprise (i) a colorant layer deposited from a composition of the present invention, (ii) a sealer deposited from a radiation curable composition, wherein the sealer is deposited over at least a portion of the colorant layer, and (iii) a topcoat deposited from a radiation curable composition, wherein the topcoat is deposited over at least a portion of the sealer. In certain embodiments, the radiation curable composition from which at least one of the sealer and topcoat is deposited comprises a waterborne composition. In other embodiments, the radiation curable composition from which at least one of the sealer and topcoat is deposited comprises a composition that is substantially free of monofunctional reactive diluents and/or inert solvents, such as the sprayable compositions described in United States Published Patent Application No. 2006/0030634 A1 at [0020] to [0047], the cited portion of which being incorporated herein by reference.

As used herein, the term "sealer" refers to a protective coating applied directly to a colorant layer while a "topcoat" refers to a protective coating applied directly to the sealer. In certain of the coating systems of the present invention, the sealer and/or topcoat are deposited from radiation curable compositions, such as compositions comprising a radiation curable material susceptible to cationic and/or free radical cure. For example, in certain embodiments the sealer and/or the topcoat are deposited from a composition comprising a polymer comprising an alkyd portion and a free radical curable portion, such as is described in United States Patent Application Publication No. 2004-0013895 A1 at [0005] to [0022], the cited portion of which being incorporated by reference herein.

In certain embodiments, the sealer and/or topcoat are deposited from a radiation curable composition that comprises a radiation curable material susceptible to cationic cure. In such cases, it is often desirable to include a cationic photoinitiator in the composition from the colorant layer is deposited. In other embodiments of the present invention, the sealer and/or topcoat are deposited from a radiation curable composition that comprises a radiation curable material susceptible to free radical cure. In such cases, it is often desirable to include a free radical photoinitiator in the coating composition from the colorant layer is deposited.

The present invention also provides methods for at least partially coating a wood substrate with a multi-layer composite coating system. These methods comprise: (a) spray applying a coloring composition to the substrate to provide a coloring layer; and (b) applying at least one of a sealer and topcoat, deposited from a radiation curable composition, over at least a portion of the colorant layer. In these methods of the present invention, the colorant layer is deposited from a composition of the present invention. The sealer and/or topcoat coating compositions can then be cured. Thus, for example, the sealer and/or topcoat compositions may be cured by irradiation with actinic radiation as is known to those skilled in the art. In certain embodiments, curing can be completed in less than one minute.

In certain embodiments, an ultraviolet light source having a wavelength range of 180 to 4000 nanometers may be used to cure the sealer and/or topcoat compositions. For example, sunlight, mercury lamps, arc lamps, xenon lamps, gallium lamps, and the like may be used. In one example, the sealer and/or topcoat compositions may be cured by a medium pressure mercury lamp having an intensity of 48 to 360 W/cm, for a total exposure of 100 to 2000 mJ/cm², such as 500 to 1000 mJ/cm² as measured by a POWERMAP UV Radiometer commercially available from EIT Inc., Sterling, Virginia.

Whereas particular embodiments of this invention have been described above for purposes of illustration, it will be evident to those skilled in the art that numerous variations of the details of the present invention may be made without departing from the invention as defined in the appended claims.

Illustrating the invention are the following examples that are not to be considered as limiting the invention to their details. All parts and percentages in the examples, as well as throughout the specification, are by weight unless otherwise indicated.

### EXAMPLE 1

Stain 1 and Stain 2 were prepared using the ingredients and amounts (in grams) shown in Table 1. The samples were prepared by adding the materials to a blending vessel and agitating with an air motor equipped with a cowles blade for 20-30 minutes.

**Table 1**

| Ingredient | Stain 1 | Stain 2 |
|---|---|---|
| Acetone | 73.256 | 86.028 |
| PM Acetate¹ | 5.315 | 5.314 |
| Ethylene Glycol Monopropyl Ether | 1.462 | 1.462 |
| PARALOID B-66² | 0.95 | 0.95 |
| Photonitiator³ | 0.302 | 0.302 |
| Amine-Modified Polyether Acrylate⁴ | 0.341 | 0.341 |
| Parachlorobenzotrifluoride | 18.171 | 5.4 |
| Black Pigment⁵ | 0.131 | 0.131 |
| Red Pigment⁶ | 0.205 | 0.205 |
| Yellow Pigment⁷ | 0.366 | 0.366 |
| Weight Average Relative Evaporation Rate | 4.47 | 5.09 |

| | | |
|---|---|---|
| ¹ Propylene glycol monomethyl ether acetate commercial available from Eastman Chemical Company. ² Thermoplastic acrylic resin (100% solids) commercially available from The Dow Chemical Company ³ 2,4,6-Trimethylbenzoyldiphenylphosphine oxide ⁴ LAROMER PO 77 F commercially available from BASF ⁵ HOSTAPRINT Black L 32 commercially available from Clariant International Ltd. ⁶ HOSTAPRINT Red HF2B 32 commercially available from Clariant International Ltd. ⁷ HOSTAPRINT Yellow GG32 commercially available from Clariant International Ltd. | | |

### EXAMPLES 2-3

Two maple cabinet doors were sanded with 180 grit sand paper. The doors were stained by hand spraying each door at an 8 inch part distance, with an 8 inch fan pattern using a Kremlin air-assisted-airless spray-gun connected to a pressure pot set at 10psi fluid pressure. Example 2 was stained with Stain 1 using the method described above. Example 3 was stained with Stain 2 using the method described above. The doors were then coated with 17-20 microns of a sealer sold under the trade name R2035Z49, which is commercially available from PPG Industries, Inc. The sealed doors were immediately cured with 950mJ of UV light. After curing the sealed the doors, they were sanded using 320 grit sand paper and coated with 75-85 microns of a topcoat sold under the trade name A1430Z83, which is commercially available from PPG Industries, Inc. The doors were then dehydrated for 8 minutes at 120°F and cured with 950mJ of UV light. The sealer and topcoat were applied using a Superfici air-assisted-airless horizontal reciprocating spray machine.

Each cabinet door was evaluated for appearance. The result of which was that Example 2 had a smooth even appearance while Example 3 had evenly distributed dark spots across the door. These spots were an unacceptable result. It was evident that the Example 2 was superior for appearance.

It will be appreciated by those skilled in the art that changes could be made to the embodiments described above without departing from the broad inventive concept thereof. It is understood, therefore, that this invention is not limited to the particular embodiments disclosed.

## Claims

1. A method for coloring a wood substrate, comprising spray applying a coloring composition to the wood substrate, the coloring composition comprising:
(a) film-forming resin,
(b) a colorant, and
(c) a plurality of organic solvents, wherein
(i) the organic solvents have a weight average relative evaporation rate of from 3.0 to 5.0; and
(ii) the composition has no more than 1 pound per gallon (119.8 kg/m³) of VOLATILE ORGANIC COMPOUND.

2. The method of claim 1, wherein the composition comprises no more than 5 percent by weight solids, based on the total composition weight.

3. The method of claim 1, wherein the colorant comprises a carrier material comprising a vinyl chloride-vinyl acetate copolymer.

4. The method of claim 1, wherein the plurality of organic solvents is present in the composition in an amount of at least 90 percent by weight and up to 99 percent by weight, based on the total weight of the composition.

5. The method of claim 4, wherein the composition comprises no more than 0.8 pounds per gallon (95.9 kg/m³) of VOLATILE ORGANIC COMPOUND.

6. The method of claim 5, wherein the plurality of organic solvents has a weight average relative evaporation rate of at least 4.0 and no more than 5.0.

7. The method of claim 1, wherein the plurality of organic solvents comprises acetone.

8. The method of claim 7, wherein acetone is present in an amount of at least 60 percent by weight and no more than 80 percent by weight, based on the total weight of organic solvents present in the composition.

9. The method of claim 7, wherein the plurality of organic solvents further comprises a solvent comprising dimethyl carbonate, methyl formate, t-butyl acetate and/or parachlorobenzotrifluoride.

10. The method of claim 9, wherein the plurality of organic solvents comprises parachlorobenzotrifluoride and parachlorobenzotrifluoride is present in an amount of at least 1 percent by weight and no more than 30 percent by weight, based on the total weight of organic solvent present in the composition.

11. The method of claim 1, wherein the composition further comprises a polymerizable ethylenically unsaturated compound and a photoinitiator.

## Patentansprüche

1. Ein Verfahren zur Färbung eines Holzsubstrates umfassend Sprühauftragen einer farbgebenden Zusammensetzung auf das Holzsubstrat, die farbgebende Zusammensetzung enthaltend:
(a) filmbildendes Harz,
(b) ein Farbmittel und
(c) eine Mehrzahl organischer Lösungsmittel, wobei
(i) die organischen Lösungsmittel eine gewichtsgemittelte relative Verdunstungsrate von 3,0 bis 5,0 haben; und
(ii) die Zusammensetzung nicht mehr als ein Pfund pro Gallone (119,8 kg/m³) an flüchtiger organischer Verbindung hat.

2. Das Verfahren gemäß Anspruch 1, wobei die Zusammensetzung nicht mehr als 5 Gewichtsprozent Feststoffe, basierend auf dem Gesamtgewicht der Zusammensetzung, umfasst.

3. Das Verfahren gemäß Anspruch 1, wobei das Farbmittel ein Trägermaterial, umfassend ein Vinylchlorid-Vinylacetat Copolymer enthält.

4. Das Verfahren gemäß Anspruch 1, wobei die Mehrzahl an organischen Lösungsmitteln in der Zusammensetzung in einer Menge von mindestens 90 Gewichtsprozent und bis zu 99 Gewichtsprozent, basierend auf dem Gesamtgewicht der Zusammensetzung, vorhanden ist.

5. Das Verfahren gemäß Anspruch 4, wobei die Zusammensetzung nicht mehr als 0,8 Pfund pro Gallone (95,9 kg/m³) an flüchtiger organischer Verbindung enthält.

6. Das Verfahren gemäß Anspruch 5, wobei die Mehrzahl an organischen Lösungsmitteln eine gewichtsgemittelte relative Verdunstungsrate von mindestens 4,0 und nicht mehr als 5,0 hat.

7. Das Verfahren gemäß Anspruch 1, wobei die Mehrzahl an organischen Lösungsmitteln Aceton umfasst.

8. Das Verfahren gemäß Anspruch 7, wobei Aceton in einer Menge von mindestens 60 Gewichtsprozent und nicht mehr als 80 Gewichtsprozent, basierend auf dem Gesamtgewicht an in der Zusammensetzung vorhandenen organischen Lösungsmitteln, vorliegt.

9. Das Verfahren gemäß Anspruch 7, wobei die Mehrzahl an organischen Lösungsmitteln des Weiteren ein Lösungsmittel umfassend Dimethylcarbonat, Methylformat, tert.-Butylacetat und/oder para-Chlorbenzotrifluorid enthält.

10. Das Verfahren gemäß Anspruch 9, wobei die Mehrzahl an organischen Lösungsmitteln para-Chlorbenzotrifluorid umfasst und para-Chlorbenzotrifluorid in einer Menge von mindestens 1 Gewichtsprozent, und nicht mehr als 30 Gewichtsprozent, basierend auf dem Gesamtgewicht an in der Zusammensetzung vorhandenen organischen Lösungsmitteln, vorliegt.

11. Das Verfahren gemäß Anspruch 1, wobei die Zusammensetzung des Weiteren eine polymerisierbare ethylenisch ungesättigte Verbindung und einen Photoinitiator umfasst.

## Revendications

1. Procédé de coloration d'un substrat en bois, comprenant l'application par pulvérisation d'une composition colorante au substrat en bois, la composition colorante comprenant :
(a) une résine filmogène,
(b) un colorant, et
(c) une pluralité de solvants organiques, dans lequel
(i) les solvants organiques ont un taux d'évaporation relative moyen en poids de 3,0 à 5,0 ; et
(ii) la composition comporte au plus 1 livre par gallon (119,8 kg/m³) de composés organiques volatils.

2. Procédé selon la revendication 1, dans lequel la composition comprend au plus 5 pour cent en poids de solides, sur la base du poids total de la composition.

3. Procédé selon la revendication 1, dans lequel le colorant comprend un matériau vecteur comprenant un copolymère de chlorure de vinyle-acétate de vinyle.

4. Procédé selon la revendication 1, dans lequel la pluralité de solvants organiques est présente dans la composition dans une quantité d'au moins 90 pour cent en poids et jusqu'à 99 pour cent en poids, sur la base du poids total de la composition.

5. Procédé selon la revendication 4, dans lequel la composition comprend au plus 0,8 livre par gallon (95,9 kg/m³) de composés organiques volatils.

6. Procédé selon la revendication 5, dans lequel la pluralité de solvants organiques a un taux d'évaporation relative moyen en poids d'au moins 4,0 et d'au plus 5,0.

7. Procédé selon la revendication 1, dans lequel la pluralité de solvants organiques comprend de l'acétone.

8. Procédé selon la revendication 7, dans lequel l'acétone est présente dans une quantité d'au moins 60 pour cent en poids et d'au plus 80 pour cent en poids, sur la base du poids total des solvants organiques présents dans la composition.

9. Procédé selon la revendication 7, dans lequel la pluralité de solvants organiques comprend en outre un solvant comprenant du carbonate de diméthyle, du formiate de méthyle, de l'acétate de t-butyle et/ou du parachlorobenzotrifluorure.

10. Procédé selon la revendication 9, dans lequel la pluralité de solvants organiques comprend du parachlorobenzotrifluorure et le parachlorobenzotrifluorure est présent dans une quantité d'au moins 1 pour cent en poids et d'au plus 30 pour cent en poids, sur la base du poids total des solvants organiques présents dans la composition.

11. Procédé selon la revendication 1, dans lequel la composition comprend en outre un composé éthyléniquement insaturé polymérisable et un photoinitiateur.
